# EUROPÄISCHE PATENTSCHRIFT

(11) **EP 2 516 229 B1**
(45) Veröffentlichungstag und Bekanntmachung des Hinweises auf die Patenterteilung: **01.07.2015**
(21) Anmeldenummer: 10778916.6
(22) Anmeldetag: 28.10.2010
(51) Int. Cl.: B60T 8/36, F16K 31/06

(54) **MAGNETVENTIL SOWIE FAHRERASSISTENZEINRICHTUNG MIT EINEM DERARTIGEN MAGNETVENTIL**
MAGNETIC VALVE AND DRIVER ASSISTANCE DEVICE COMPRISING SAID TYPE OF MAGNETIC VALVE
ÉLECTROVANNE ET SYSTÈME D'AIDE À LA CONDUITE ÉQUIPÉ DE CETTE DERNIÈRE

(30) Priorität: 23.12.2009 DE 102009060293
(43) Veröffentlichungstag der Anmeldung: 31.10.2012
(73) Patentinhaber: Robert Bosch GmbH, 70442 Stuttgart (DE)
(72) Erfinder: HEYER, Klaus, 71691 Freiberg (DE); KURZ, Edgar, 74081 Heilbronn-Horkheim (DE); STOKMAIER, Gerhard, 71706 Markgroeningen (DE); KRATZER, Dietmar, 71732 Tamm (DE)
(86) Internationale Anmeldenummer: PCT/EP2010/066327
(87) Internationale Veröffentlichungsnummer: WO 2011/076469

(56) Entgegenhaltungen:
- WO-A1-2006/040248
- DE-A1- 3 310 021
- DE-A1- 10 047 399
- DE-A1- 10 208 996
- DE-A1- 19 802 464
- US-A- 5 603 483

## Beschreibung

Die Erfindung betrifft ein Magnetventil mit einem Ventilkörper, wobei in dem Ventilkörper ein mit einem Dichtelement verschließbarer Ventilsitz, mindestens ein in einen das Dichtelement zumindest bereichsweise aufnehmenden Fluidraum des Magnetventils mündender Auslasskanal und ein das Dichtelement zumindest bereichsweise umgebendes Strömungsleitelement vorgesehen sind, wobei das Dichtelement mit einem in einem auf einer dem Fluidraum abgewandten Seite des Strömungsleitelements ausgebildeten Magnetankerraum angeordneten Magnetanker wirkverbunden ist. Die Erfindung betrifft weiterhin eine Fahrerassistenzeinrichtung.

### Stand der Technik

Magnetventile der eingangs genannten Art sind aus dem Stand der Technik bekannt. Derartige Magnetventile, beispielsweise stromlos geschlossene 2/2-Magnetventile oder auch stromlos geschlossene 2/2-Magnetventile, können in ABS-, TCS- oder ESP-Systemen eingesetzt werden. Die Magnetventile weisen einen Ventilsitz auf, welcher mit einem Dichtelement verschließbar ist. Das Dichtelement ist dazu zumindest zwischen einer Schließstellung und einer Freigabestellung verlagerbar. In der Schließstellung ist das Dichtelement derart angeordnet, dass es den Ventilsitz abdeckt und damit verschließt. In der Freigabestellung liegt das Dichtelement beispielsweise beabstandet von dem Ventilsitz vor, sodass Fluid durch den Ventilsitz hindurchtreten kann. In der Schließstellung ist das Magnetventil für das Fluid undurchlässig, während dieses in der Freigabestellung durch das Magnetventil hindurchströmen kann. Das Dichtelement ist zumindest bereichsweise in dem Fluidraum des Magnetventils angeordnet. Auch der Ventilsitz kann in einer Wand des Fluidraums vorliegen. In den Fluidraum mündet zudem der mindestens eine Auslasskanal, wobei eine permanente Fluidverbindung zwischen dem Fluidraum und dem Auslasskanal vorliegen kann. Über einen Einlasskanal kann dem Magnetventil Fluid zugeführt werden, wobei dieses über den Einlasskanal zu dem Ventilsitz hingeführt wird. Liegt das Dichtelement in der Freigabestellung vor, so kann das Fluid durch den Ventilsitz hindurch in den Fluidraum gelangen und anschließend über den Auslasskanal aus diesem abgeführt werden.

In der Freigabestellung ist das Dichtelement üblicherweise über dem Ventilsitz angeordnet, sodass es oder ein mit ihm verbundener Magnetanker durch das durch den Ventilsitz strömende Fluid angeströmt wird. Zudem zeigt die Strömungsrichtung des einströmenden Fluids häufig von dem Auslasskanal fort, sodass das Fluid zunächst in dem Fluidraum abgebremst wird, bevor es in den Auslasskanal einströmen kann. Dabei kann es auch vorkommen, dass das Fluid in Bereiche zwischen dem Magnetanker und einem Gehäuse des Magnetventils gelangt. Sowohl die Anströmung des Dichtelements und/oder des Magnetankers durch das einströmende Fluid als auch das zwischen Magnetanker und Gehäuse eindringende Fluid haben Einfluss auf die Verlagerbarkeit des Dichtelements, da durch das Fluid eine zusätzliche axiale Kraft auf das Dichtelement beziehungsweise auf den mit dem Dichtelement verbundenen Magnetanker aufgebracht wird. Dies kann unter Umständen die Stellgüte des Magnetventils negativ beeinflussen. Dies rührt daher, dass diese zusätzliche Kraft das Kräftegleichgewicht zwischen einer Rückstellkraft eines Federelements und einer zum Verlagern des Dichtelements dienenden Magnetkraft, welche an dem Magnetanker angreift, sowie einer bei der Auslegung des Magnetventils berücksichtigten Druckkraft des Fluids beeinflusst. Dies ist insbesondere bei Magnetventilen der Fall, bei welchen eine Mündung des Auslasskanals in dem Fluidraum neben dem Ventilsitz angeordnet ist, sodass das Einströmen des Fluids durch den Ventilsitz und das Ausströmen durch den Auslasskanal in entgegengesetzte Richtungen erfolgt.

Grundsätzlich wäre es vorteilhaft, wenn anstatt der in axialer Richtung auf das Dichtelement beziehungsweise den Magnetanker wirkenden zusätzlichen Kräfte lediglich rotationssymmetrische Radialkräfte auftreten würden, weil diese ohne Einfluss auf das axiale Kräftegleichgewicht sind. Aus diesem Grund kann ein Strömungsleitelement vorgesehen werden, welches beispielsweise eine Strömungsleitfläche aufweist, mit welcher einströmendes Fluid in Richtung des Auslasskanals umgelenkt beziehungsweise zu diesem hingeführt wird. Erfindungsgemäß ist die Strömungsleitfläche dabei zumindest bereichsweise gekrümmt, vorteilhafterweise in Richtung des Auslasskanals. Das Strömungsleitelement trennt dabei den Magnetankerraum von einem Fluidraum des Magnetventils, in welchem der Ventilsitz angeordnet ist, ab. In dem Magnetankerraum ist der Magnetanker angeordnet, mit welchem das Dichtelement wirkverbunden ist. Durch diese Wirkverbindung ist das Dichtelement mittels des Magnetankers verlagerbar, wobei dies zumindest zwischen der Schließstellung und der Freigabestellung vorgesehen ist.

Aus dem Stand der Technik ist beispielsweis ein Magnetventil, wie in der DE 198 02 464 A1 beschrieben, bekannt. Diese zeigt ein hydraulisches magnetbetätigtes Ventil mit einem im Gehäuse des Magnetventils angeordneten Leitkörper für Druckmittel, der von einem Schließkörper durchdrungen ist und einen mit einem Ventilsitzdruckmittel leitend in Verbindung stehenden Ringkanal mit wenigstens einer umfangsseitigen Auslassöffnung des Ventilgehäuses von einem Betätigungsmittel des Ventils enthaltenden Raum abtrennt. Dabei soll der Leitkörper stirnseitig am Ventilkörper anliegend an diesem abgestützt sein und den mündungsseitigen Ventilsitz umrissübergreifende Leitkanäle aufweisen, welche abströmseitig in den Ringkanal münden. Bei bekannten Magnetventilen wird ein Druckausgleich beziehungsweise Fluidaustausch zwischen Fluidraum und Magnetankerraum durch eine Öffnung des Strömungsleitelements bewirkt, in welcher das Dichtelement zumindest bereichsweise angeordnet beziehungsweise geführt ist.

Weiter ist aus der DE 102 08 996 A1 ein Elektromagnetventil bekannt. Dieses verfügt über einen Ventileinsatz und einen Ankerraum, der sich an den Ventileinsatz anschließt und in dem ein Magnetanker längsbeweglich geführt ist, welcher mit einem Stößel verbunden ist, der den Ventileinsatz durchgreift und mit einem Ventilschließglied ausgebildet ist, das in einem Ventilraum angeordnet ist und mit einem an einem Ventilkörper ausgebildeten Ventilsitz zusammenwirkt. Dabei ist ein rohrförmiger Einsatz vorgesehen, der konzentrisch zu dem Stößel angeordnet ist und eine Durchströmung des Ankerraums mit Fluid bewirkt. Weitere elektromagnetisch betätigbare Ventile sind aus der US 5,603,483 und der WO 2006/040248 A1 bekannt.

### Offenbarung der Erfindung

Demgegenüber weist das Magnetventil mit den im Anspruch 1 genannten Merkmalen den Vorteil auf, dass eine Verbesserung der Stellbarkeit des Magnetventils erreicht wird. Dazu ist erfindungsgemäß vorgesehen, dass Ventilkörper und Strömungsleitelement mindestens einen eine Fluidverbindung zwischen dem Fluidraum und dem Magnetankerraum herstellenden Verbindungskanal gemeinsam ausbilden. Über den Verbindungskanal kann Fluid zwischen Fluidraum und Magnetankerraum strömen, sodass ein Druckausgleich zwischen diesen beiden Räumen realisiert ist. Auf diese Weise kann es beispielsweise nicht dazu kommen, dass durch ein Verlagern des Magnetankers innerhalb des Magnetankerraums ein Druck aufgebaut wird, welcher einer Verlagerung des Magnetankers entgegenwirkt. Somit kann durch die Fluidverbindung über den Verbindungskanal die Stellbarkeit des Magnetventils deutlich verbessert werden. Erfindungsgemäß ist vorgesehen, dass der Verbindungskanal von Ventilkörper und Strömungsleitelement gemeinsam ausgebildet ist. Beispielsweise kann dazu der Verbindungskanal zum Einen von Bereichen des Ventilkörpers und zum Anderen von Bereichen des Strömungsleitelements umschlossen sein. Unter dem Begriff "Verbindungskanal" ist vor allem kein Kanal zu verstehen, welcher lediglich in dem Ventilkörper oder dem Strömungsleitelement ausgebildet ist. Das Strömungsleitelement verhindert, dass in den Fluidraum durch den Ventilsitz einströmendes Fluid unmittelbar mit dem Magnetanker beziehungsweise mit Bereichen des Ventilkörpers, welche in dem Magnetankerraum angeordnet sind, in Verbindung treten und so mit einer unerwünschten Kraft beaufschlagen kann. Zu diesem Zweck trennt das Strömungsleitelement den Magnetankerraum von dem Fluidraum ab, sodass das Fluid lediglich auf das Strömungsleitelement die Kraft aufträgt. Um zu verhindern, dass das Strömungsleitelement von dieser Kraft in Richtung des Magnetankers verlagert wird, ist das Strömungsleitelement innerhalb des Magnetventils nicht verlagerbar, also ortsfest gehalten. Zu diesem Zweck kann es beispielsweise formschlüssig, kraftschlüssig und/oder stoffschlüssig in dem Fluidraum befestigt sein. Bevorzugt ist das Strömungsleitelement in den Ventilkörper derart eingepresst, dass eine kraftschlüssige Verbindung zwischen Strömungsleitelement und Ventilkörper vorliegt.

Eine Weiterbildung der Erfindung sieht vor, dass der Verbindungskanal zwischen einer Innenwand des Ventilkörpers und einer Außenwand des Strömungsleitelements vorliegt. Das Strömungsleitelement soll also derart in dem Ventilkörper angeordnet sein, dass der Verbindungskanal zwischen diesen beiden Elementen ausgebildet ist. Beispielsweise kann der Verbindungskanal zumindest bereichsweise als Ringkanal vorliegen, wenn sowohl der Ventilkörper als auch das Strömungsleitelement im Wesentlichen im Querschnitt kreisrund sind. Um den Verbindungskanal auszubilden, müssen selbstverständlich der Ventilkörper und/oder das Strömungsleitelement zumindest bereichsweise von diesem kreisrunden Querschnitt abweichen. Alternativ ist es auch möglich, Ventilkörper und Strömungsleitelement im Wesentlichen kreisrund auszubilden und durch Streben zu beabstanden, welche entweder an dem Ventilkörper oder dem Strömungsleitelement vorliegen können.

Erfindungsgemäß ist in dem Ventilkörper mindestens ein Radialkanal ausgebildet ist, der eine Fluidverbindung zwischen dem Auslasskanal und dem Verbindungskanal herstellt. Während der Auslasskanal in dem Ventilkörper vorliegt, wird der Verbindungskanal von Ventilkörper und Strömungsleitelement gemeinsam ausgebildet. Um eine Fluidverbindung zwischen Auslasskanal und Verbindungskanal und damit auch Fluidraum und Magnetankerraum herzustellen, ist der Radialkanal vorgesehen, welcher in dem Ventilkörper ausgebildet ist. Unter Radialkanal ist dabei ein Kanal zu verstehen, welcher dazu geeignet ist, Fluid im Wesentlichen in radialer Richtung zu führen, wobei eine Hauptströmungsrichtung des Fluids zumindest eine Radialkomponente aufweist. Der Radialkanal ist also dazu vorgesehen, eine Fluidverbindung von einem bezüglich einer Längsachse des Magnetventils weiter innen vorgesehenen Auslasskanal zu einem bezüglich der Längsachse weiter außen gelegenen Verbindungskanal herzustellen. Der Radialkanal liegt beispielsweise als Vertiefung beziehungsweise Ausnehmung des Ventilkörpers vor.

Erfindungsgemäß liegt das Strömungsleitelement auf einem Boden des Fluidraums auf und greift der Radialkanal durch die Auflagefläche des Strömungsleitelements. Ist das Strömungsleitelement durchgängig auf dem Boden des Fluidraums angeordnet beziehungsweise auf diesem aufliegend vorgesehen, so liegt keine Fluidverbindung zwischen dem Fluidraum und radial außerhalb des Strömungsleitelements angeordneten Bereichen vor. Aus diesem Grund ist der Radialkanal vorgesehen. Dieser durchgreift die Auflagefläche des Strömungselements auf dem Boden des Fluidraums derart, dass die Fluidverbindung zwischen dem Fluidraum beziehungsweise dem Auslasskanal und radial außerhalb des Strömungsleitelements angeordneten Bereichen, insbesondere dem Verbindungskanal, hergestellt ist. Somit ist die Auflagefläche des Strömungsleitelements nicht durchgängig, sondern wird von dem Radialkanal durchgriffen.

Eine Weiterbildung der Erfindung sieht vor, dass der Ventilkörper in seiner Innenwand und/oder das Strömungsleitelement in seiner Außenwand eine den Verbindungskanal mit ausbildende Ausnehmung aufweist. Die Ausnehmung ist dazu vorgesehen, den Ventilkörper und das Strömungsleitelement derart voneinander zu beabstanden, dass zwischen ihnen Fluid hindurchströmen kann und mithin der Verbindungskanal ausgebildet ist. Dabei kann die Ausnehmung in Umfangsrichtung des Magnetventils prinzipiell eine beliebige Erstreckung aufweisen. Vorteilhafterweise sind mehrere Ausnehmungen vorgesehen, welche gleichmäßig über den Umfang verteilt sind. Bevorzugt ist eine gerade Anzahl Ausnehmungen ausgebildet, wobei sich jeweils zwei der Ausnehmungen diametral gegenüberliegen. Die Ausnehmung durchgreift die Innenwand beziehungsweise die Außenwand, sodass eine randoffene Vertiefung vorliegt. Durch die Ausnehmung ist weiterhin ein durchgehender verlauf von Innenwand beziehungsweise Außenwand gegeben, diese weichen lediglich bereichsweise von einer bestimmten Formgebung, beispielsweise einer Kreisform, ab. Auf diese Weise kann der Verbindungskanal zwischen der Innenwand und der Außenwand ausgebildet sein.

Eine Weiterbildung der Erfindung sieht vor, dass der Verbindungskanal und/oder der Radialkanal im Querschnitt zumindest bereichsweise rund, insbesondere kreisrund, sind. Dies gilt insbesondere, wenn ein Innenraum des Ventilkörpers, also der Fluidraum und das Strömungsleitelement ebenfalls im Wesentlichen rund beziehungsweise kreisrund sind. In diesem Fall kann der Verbindungskanal zumindest bereichsweise als Ringkanal vorliegen, wobei er außen von der Innenwand des Ventilkörpers und innen von der Außenwand des Strömungsleitelements begrenzt ist. Auch der Radialkanal kann zumindest bereichsweise rund ausgebildet sein. Beispielsweise liegt der Radialkanal lediglich als in Axialrichtung eingebrachte Bohrung des Ventilkörpers vor. Auf diese Weise ist eine besonders einfache Herstellung des Radialkanals möglich. Der Durchmesser der Bohrung wird dabei derart gewählt, dass die Fluidverbindung zwischen dem Auslasskanal und dem Verbindungskanal hergestellt ist.

Eine Weiterbildung der Erfindung sieht vor, dass das Strömungsleitelement aus Metall oder aus Kunststoff besteht. Prinzipiell kann das Strömungsleitelement aus einem beliebigen Material hergestellt sein. Vorteilhafterweise sind jedoch Metall oder Kunststoff vorgesehen. Auf diese Weise kann das Magnetventil mit einer sehr hohen Dauerfestigkeit ausgelegt werden.

Eine Weiterbildung der Erfindung sieht vor, dass das Strömungsleitelement als Stanzbiegeteil oder als Spritzteil ausgebildet ist. Insbesondere wenn das Strömungsleitelement aus Metall besteht, kann es vorteilhaft sein, es als Stanzbiegeteil herzustellen. Dagegen ist ein aus Kunststoff bestehendes Strömungsleitelement besonders einfach als Spritzteil realisierbar.

Eine Weiterbildung der Erfindung sieht vor, dass ein Ausrichtmittel zur Ausrichtung des Strömungsleitelements in Umfangsrichtung in dem Fluidraum vorgesehen ist. Das Ausrichtmittel ist insbesondere dann notwendig, wenn der Verbindungskanal durch die in der Außenwand des Strömungsleitelements ausgebildete Ausnehmung gebildet ist. In diesem Fall ist es notwendig, den Verbindungskanal hinsichtlich des Radialkanals, welcher in dem Ventilkörper ausgebildet ist, auszurichten, um die Fluidverbindung zwischen dem Auslasskanal und dem Verbindungskanal herzustellen. Aus diesem Grund muss das Strömungsleitelement in dem Fluidraum hinsichtlich der Umfangsrichtung ausgerichtet werden. Zu diesem Zweck ist das Ausrichtmittel vorgesehen. Das Ausrichtmittel kann beispielsweise aus einem Vorsprung bestehen, welcher entweder an dem Ventilkörper oder dem Strömungsleitelement ausgebildet ist und mit einer Ausnehmung des jeweils anderen Elements zusammenwirkt, um die Ausrichtung des Strömungsleitelements zu realisieren.

Die Erfindung betrifft weiterhin eine Fahrerassistenzeinrichtung, insbesondere ABS-, TCS- oder ESP-Einrichtung, mit mindestens einem einen Ventilkörper aufweisenden Magnetventil nach Anspruch 1.

Die Erfindung wird im Folgenden anhand der in der Zeichnung dargestellten Ausführungsbeispiele näher erläutert, ohne dass eine Beschränkung der Erfindung erfolgt. Es zeigen:
- Figur 1: einen Querschnitt durch einen Bereich einer ersten Ausführungsform eines Magnetventils,
- Figur 2: eine alternative Ansicht des aus der Figur 1 bekannten Magnetventils,
- Figur 3: ein Ventilkörper des aus der Figur 1 bekannten Magnetventils,
- Figur 4: ein Strömungsleitelement des aus der Figur 1 bekannten Magnetventils,
- Figur 5: einen Querschnitt eines Bereichs einer zweiten Ausführungsform des Magnetventils,
- Figur 6: eine alternative Ansicht des aus der Figur 5 bekannten Magnetventils,
- Figur 7: den Ventilkörper des aus der Figur 5 bekannten Magnetventils und
- Figur 8: das Strömungsleitelement des aus der Figur 5 bekannten Magnetventils.

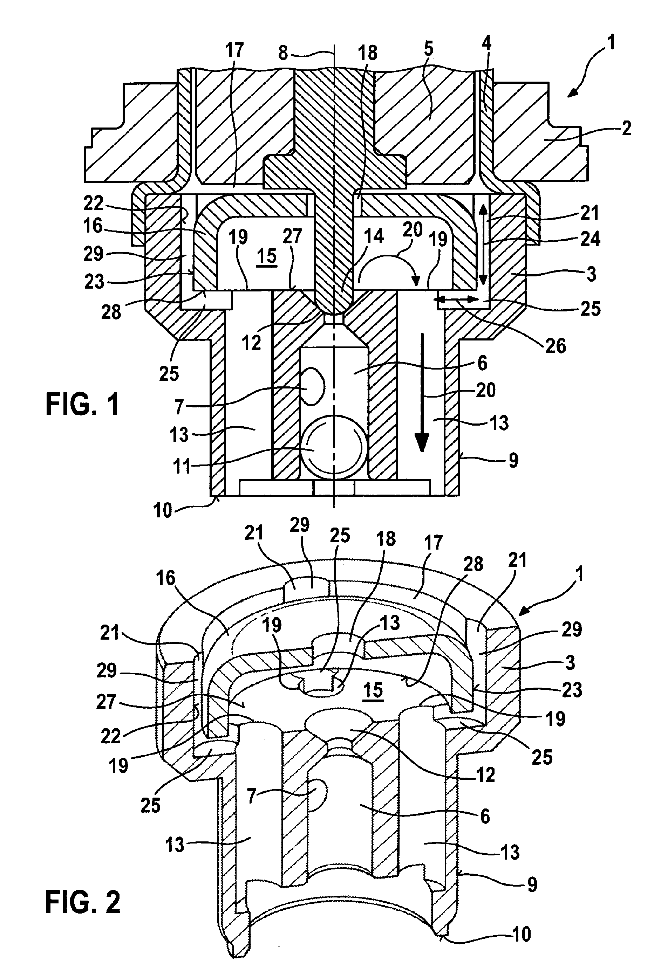

Die Figur 1 zeigt einen Querschnitt eines Bereichs eines Magnetventils 1, welches in einer externen Einrichtung 2, welche hier lediglich angedeutet ist, angeordnet ist. Das Magnetventil 1 weist einen Ventilkörper 3 und ein Gehäuse 4 auf, wobei in dem Gehäuse 4 ein Magnetanker 5 axial beweglich gelagert ist. In dem Ventilkörper 3 ist ein Steigkanal 6 ausgebildet, welcher mit mindestens einem Einlasskanal 7 in Strömungsverbindung steht. Durch den Einlasskanal 7 kann dem Magnetventil 1 Fluid zugeführt werden. Der Steigkanal 6 ist dabei in axialer Richtung (hinsichtlich einer Längsachse 8 des Magnetventils 1) ausgebildet. Die Einlasskanäle 7 gehen dagegen in radialer Richtung von diesem aus und münden in eine Mantelfläche 9 des Ventilkörpers 3 beziehungsweise des Magnetventils 1.

Um den Steigkanal 6 auszubilden, wird ausgehend von einer Stirnfläche 10 des Magnetventils 1 beziehungsweise des Ventilkörpers 3 zunächst eine Bohrung in axialer Richtung in den Ventilkörper 3 eingebracht. Anschließend wird diese unterhalb der Einmündung der Einlasskanäle 7 in den Steigkanal 6 mittels eines Verschlusselements 11 verschlossen, sodass das Fluid, welches durch die Eingangskanäle 7 in den Steigkanal 6 gelangt, in Richtung eines Ventilsitzes 12 strömt. Der Ventilsitz 12 ist dabei in dem Ventilkörper 3 ausgebildet. Der Ventilkörper 3 weist weiterhin mindestens einen Auslasskanal 13 auf. In der vorliegenden Ausführungsform sind sowohl vier Einlasskanäle 7 als auch vier Auslasskanäle 13 vorgesehen, wobei lediglich ein Einlasskanal 7 und zwei Auslasskanäle 13 dargestellt sind.

Mittels des Magnetankers 5 ist ein Dichtelement 14 in axialer Richtung des Magnetventils 1 verlagerbar. Dabei kann das Dichtelement 14 in einer Schließstellung (wie in Figur 1 gezeigt) derart mit dem Ventilsitz 12 zusammenwirken, dass eine Fluidverbindung zwischen Einlasskanälen 7 und Auslasskanälen 13 unterbrochen ist. Wird das Dichtelement 14 mittels des Magnetankers 5 in axialer Richtung verlagert, so wird es nunmehr oberhalb des Ventilsitzes 12 angeordnet, sodass Fluid durch den Ventilsitz 12 hindurchströmen kann, womit die Fluidverbindung zwischen Einlasskanälen 7 und Auslasskanälen 13 hergestellt ist. Das Dichtelement 14 ist dabei in einem Fluidraum 15 zumindest bereichsweise angeordnet. Der Fluidraum 15 wird von dem Ventilkörper 3 und einem Strömungsleitelement 16 gebildet, wobei das Strömungsleitelement 16 derart in dem Ventilkörper 3 angeordnet ist, dass sowohl der Fluidraum 15 als auch ein Magnetankerraum 17 vorliegen. In dem Magnetankerraum 17 ist sowohl das Dichtelement 14 als auch der Magnetanker 5 zumindest bereichsweise angeordnet. Der Magnetankerraum 17 befindet sich dabei auf der dem Fluidraum 15 abgewandten Seite des Strömungsleitelements 16.

Das Strömungsleitelement 16 weist eine zentrale Ausnehmung 18 auf, welche von dem Dichtelement 14 durchgriffen ist. Das Strömungsleitelement 16 ist dazu vorgesehen, die Strömung des Fluids in dem Fluidraum 15 zu verbessern, indem das durch den Ventilsitz 12 in den Fluidraum 15 einströmende Fluid vorzugsweise in Richtung von Mündungen 19 der Auslasskanäle 13 in den Fluidraum 15 umgelenkt wird. Die Strömung, welche vorliegt, wenn das Dichtelement 14 aus der Schließstellung herausverlagert wird, ist durch die Pfeile 20 angedeutet. Insbesondere ist das Strömungsleitelement 16 jedoch dazu vorgesehen, zu verhindern, dass das durch den Ventilsitz 12 einströmende Fluid eine unerwünschte Kraft auf den Magnetanker 5 beziehungsweise das Dichtelement 14 aufbringt. Zu diesem Zweck verhindert es, dass das in den Fluidraum 15 einströmende Fluid unmittelbar mit dem Magnetanker 5 beziehungsweise Bereichen des Dichtelements 14, welche in dem Magnetankerraum 17 angeordnet sind, in Kontakt treten kann.

Bei der in der Figur 1 dargestellten Ausführungsform des Magnetventils 1 umgibt das Strömungsleitelement 16 das Dichtelement 14 in Umfangsrichtung vollständig. Das bedeutet jedoch, dass zunächst lediglich durch die Ausnehmung 18 eine Fluidverbindung zwischen Fluidraum 15 und Magnetankerraum 17 besteht. Daher kann es bei einer Verlagerung des Magnetankers 5 beziehungsweise des Dichtelements 14 in axialer Richtung zu unterschiedlichen Drücken in dem Fluidraum 15 und dem Magnetankerraum 17 kommen beziehungsweise in dem Magnetankerraum 17 ein Druck aufgebaut werden, welcher einer Verlagerung des Magnetankers 5 entgegenwirkt. Aus diesem Grund soll mindestens ein Verbindungskanal 21 vorgesehen sein, welcher die Fluidverbindung zwischen Fluidraum 15 und Magnetankerraum 17 verbessert und somit den Aufbau des vorstehend beschriebenen Drucks in dem Magnetankerraum 17 verhindert. Auf diese Weise wird die Stellbarkeit des Magnetventils 1 deutlich verbessert.

Der Verbindungskanal 21 soll von Ventilkörper 3 und Strömungsleitelement 16 gemeinsam ausgebildet sein. Zu diesem Zweck liegt er, wie in der Figur 1 gezeigt, zwischen einer Innenwand 22 des Ventilkörpers 3 und einer Außenwand 23 des Strömungsleitelements 16 vor. Die sich daraus ergebende Fluidverbindung ist zusammen mit den möglichen Strömungsrichtungen des Fluids durch den Doppelpfeil 24 angedeutet. Bei der hier vorliegenden Ausführungsform sind vier Verbindungskanäle 21 vorgesehen, welche gleichmäßig über den Umfang des Ventilkörpers 3 verteilt sind, wobei jedoch lediglich zwei der Verbindungskanäle 21 dargestellt sind. Jedem Verbindungskanal 21 ist ein Radialkanal 25 zugeordnet, welcher in dem Ventilkörper 3 ausgebildet ist. Über diese wird eine Fluidverbindung zwischen dem Auslasskanal 13 und dem jeweiligen Verbindungskanal 21 hergestellt.

Die in dem Radialkanal 25 auftretende Strömung ist zusammen mit den möglichen Strömungsrichtungen durch den Doppelpfeil 26 gekennzeichnet. Generell ist es vorgesehen, dass das Strömungsleitelement 16 auf einem Boden 27 des Ventilkörpers 3 aufliegt. Um die Radialkanäle 25 auszubilden ist es daher vorgesehen, eine Auflagefläche 28 des Strömungsleitelements 16 auf dem Boden 27 zu durchgreifen. Zur Ausbildung der Verbindungskanäle 21 ist in der Ausführungsform des Magnetventils 1, welche in der Figur 1 dargestellt ist, in der Innenwand 22 des Ventilkörpers 3 eine Ausnehmung 29 ausgebildet. Im Bereich der Ausnehmung 29 ist die Außenwand 23 des Strömungsleitelements 16 von der innenwand 22 des Ventilkörpers 3 beabstandet, sodass an dieser Stelle der Verbindungskanal 21 hergestellt ist. In weiteren Bereichen liegen die Innenwand 22 und die Außenwand 23 aneinander an, um auf diese Weise ein kraftschlüssiges Halten des Strömungsleitelements 16 in dem Ventilkörper 3 zu realisieren.

Die Figur 2 zeigt eine alternative Ansicht des aus der Figur 1 bekannten Magnetventils 1. Dargestellt sind dabei lediglich der Ventilkörper 3 sowie das Strömungsleitelement 16. Der Ventilkörper 3 und das Strömungsleitelement 16 sind gemäß den vorstehenden Ausführungen ausgebildet, sodass insofern auf diese verwiesen sei. In der Figur 2 ist deutlich erkennbar, dass die Verbindungskanäle 21 zwischen der Innenwand 22 und der Außenwand 23 von Ventilkörper 3 und Strömungsleitelement 16 gemeinsam ausgebildet sind, wozu in dem Ventilkörper 3 die Ausnehmungen 29 vorgesehen sind.

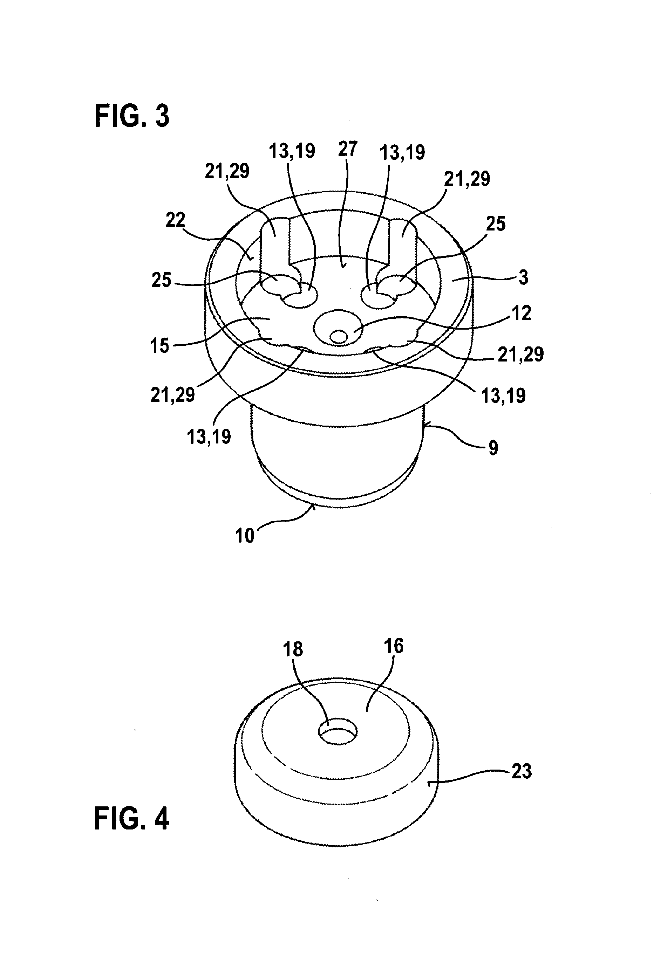

Die Figuren 3 und 4 zeigen isometrische Ansichten des Ventilkörpers 3 beziehungsweise des Strömungsleitelements 16. Auch hierzu sei auf die vorstehenden Ausführungen verwiesen. Anhand der Figur 4 wird deutlich, dass das Strömungsleitelement 16 einen stetigen, kreisrunden Außenumfang aufweist, während die Ausnehmungen 29 - wie in der Figur 3 erkennbar - in dem Ventilkörper 3 ausgebildet sind.

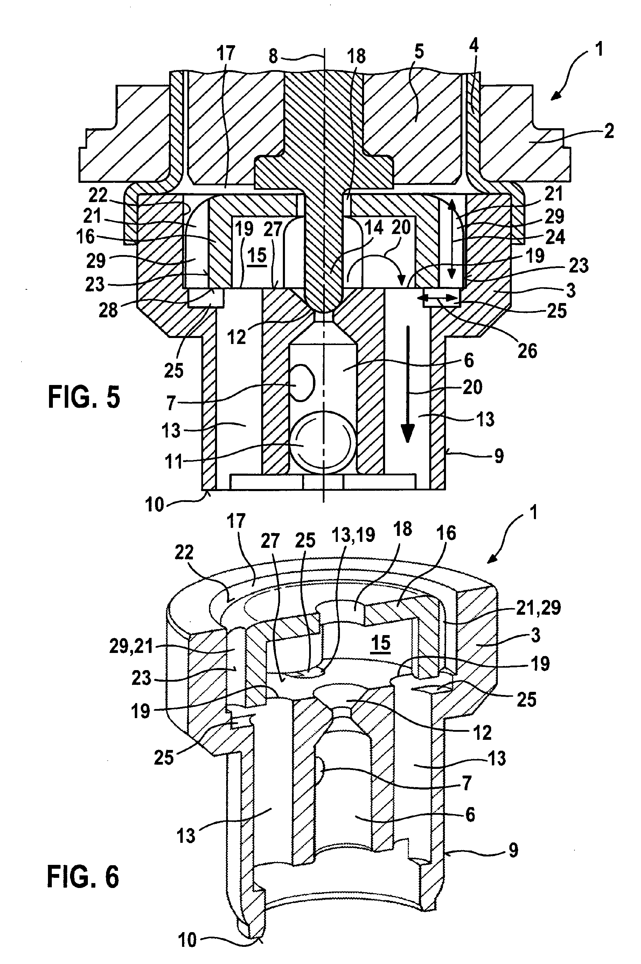

Die Figur 5 zeigt einen Querschnitt durch einen Bereich einer zweiten Ausführungsform des Magnetventils 1. Grundsätzlich entspricht diese Ausführungsform der bereits anhand der Figur 1 erläuterten. Insoweit sei auf die vorstehenden Ausführungen verwiesen. Die in der Figur 5 dargestellte Ausführungsform unterscheidet sich von der vorstehend beschriebenen lediglich dadurch, dass die Ausnehmungen 29 nun nicht in dem Ventilkörper 3, sondern in dem Strömungsleitelement 16 beziehungsweise in dessen Außenwand 23 ausgebildet sind. Die Außenwand 23 des Strömungsleitelements 16 weicht demnach von einem kreisrunden Verlauf ab. Dagegen verläuft die Innenwand 22 des Ventilkörpers 3 zumindest in dem mit der Außenwand 23 zusammenwirkenden Bereich stetig und ohne Abweichung von der Kreisform. Demnach sind auch hier die Verbindungskanäle 21 durch Zusammenwirken von Innenwand 22 und Außenwand 23 ausgebildet, wobei jedoch die dazu notwendigen Ausnehmungen 29 in dem Ventilkörper 3 realisiert sind.

Um ein Fluchten von Verbindungskanälen 21 und Radialkanälen 25 zu erreichen, ist es vorteilhaft, wenn ein hier nicht dargestelltes Ausrichtmittel vorgesehen ist. Dieses kann beispielsweise aus einem an dem Strömungsleitelement 16 ausgebildeten Vorsprung und einem den Vorsprung aufnehmenden Gegenelement bestehen. Das Gegenelement ist dabei an dem Ventilkörper 3 vorgesehen. Andersherum ist es selbstverständlich auch möglich, den Vorsprung an dem Ventilkörper 3 und das Gegenelement an dem Strömungsleitelement 16 anzuordnen.

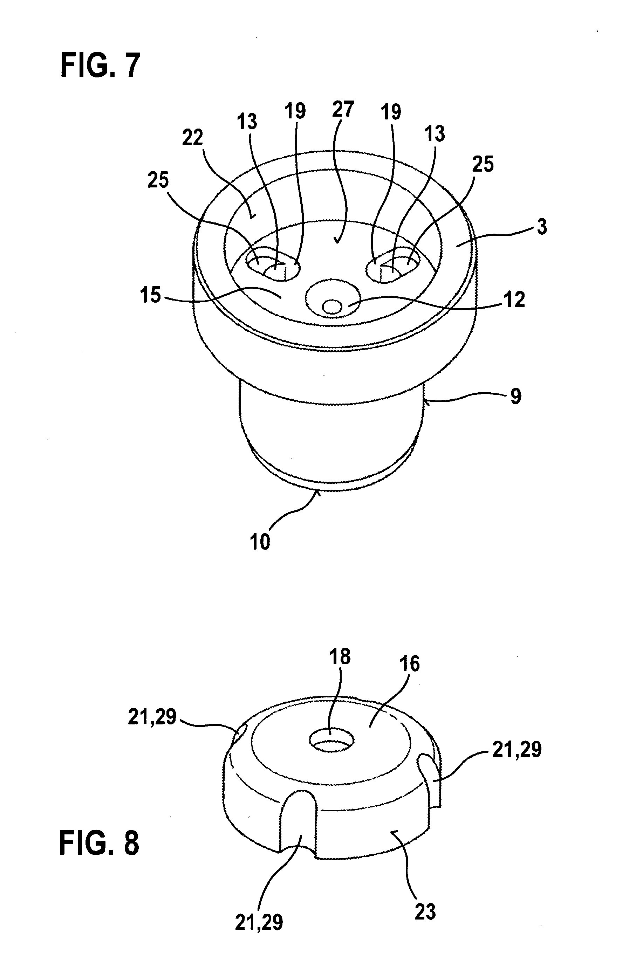

Die nachfolgenden Figuren 6, 7 und 8 verdeutlichen die Ausbildung der anhand der Figur 5 beschriebenen Ausführungsform des Magnetventils 1. Es sei daher auf die vorstehenden Ausführungen verwiesen.

## Patentansprüche

1. Magnetventil (1) mit einem Ventilkörper (3), wobei in dem Ventilkörper (3) ein mit einem Dichtelement (14) verschließbarer Ventilsitz (12), mindestens ein in einen das Dichtelement (14) zumindest bereichsweise aufnehmenden Fluidraum (15) des Magnetventils (1) mündender Auslasskanal (13) und ein das Dichtelement (14) zumindest bereichsweise umgebendes Strömungsleitelement (16) vorgesehen sind, wobei das Dichtelement (14) mit einem in einem auf einer dem Fluidraum (15) abgewandten Seite des Strömungsleitelements (16) ausgebildeten Magnetankerraum (17) angeordneten Magnetanker (5) wirkverbunden ist, wobei Ventilkörper (3) und Strömungsleitelement (16) mindestens einen eine Fluidverbindung zwischen dem Fluidraum (15) und dem Magnetankerraum (17) herstellenden Verbindungskanal (21) gemeinsam ausbilden, **dadurch gekennzeichnet, dass** in dem Ventilkörper (3) mindestens ein Radialkanal (25) ausgebildet ist, der eine Fluidverbindung zwischen dem Auslasskanal (13) und dem Verbindungskanal (21) herstellt, wobei das Strömungsleitelement (16) auf einem Boden (27) des Fluidraums (15) aufliegt und der Radialkanal (25) die Auflagefläche (28) des Strömungsleitelements (16) durchgreift, und wobei das Strömungsleitelement (16) eine in Richtung des Auslasskanals zumindest bereichsweise gekrümmte Strömungsleitfläche aufweist.

2. Magnetventil nach Anspruch 1, **dadurch gekennzeichnet, dass** der Verbindungskanal (21) zwischen einer Innenwand (22) des Ventilkörpers (3) und einer Außenwand (23) des Strömungsleitelements (16) vorliegt.

3. Magnetventil nach Anspruch 2, **dadurch gekennzeichnet, dass** der Ventilkörper (3) in seiner Innenwand (22) und/oder das Strömungsleitelement (16) in seiner Außenwand (23) eine den Verbindungskanal (21) mit ausbildende Ausnehmung (29) aufweist.

4. Magnetventil nach einem der vorhergehenden Ansprüche, **dadurch gekennzeichnet, dass** der Verbindungskanal (21) und/oder der Radialkanal (25) im Querschnitt zumindest bereichsweise rund, insbesondere kreisrund, sind.

5. Magnetventil nach einem der vorhergehenden Ansprüche, **dadurch gekennzeichnet, dass** das Strömungsleitelement (16) aus Metall oder aus Kunststoff besteht.

6. Magnetventil nach einem der vorhergehenden Ansprüche, **dadurch gekennzeichnet, dass** das Strömungsleitelement (16) als Stanzbiegeteil oder als Spritzteil ausgebildet ist.

7. Magnetventil nach einem der vorhergehenden Ansprüche, **dadurch gekennzeichnet, dass** ein Ausrichtmittel zur Ausrichtung des Strömungsleitelements (16) in Umfangsrichtung in dem Fluidraum (15) vorgesehen ist.

8. Fahrerassistenzeinrichtung, insbesondere ABS-, TCS- oder ESP-Einrichtung, mit mindestens einem einen Ventilkörper (3) aufweisenden Magnetventil (1), wobei in dem Ventilkörper (3) ein mit einem Dichtelement (14) verschließbarer Ventilsitz (12), mindestens ein in einen das Dichtelement (14) zumindest bereichsweise aufnehmenden Fluidraum (15) des Magnetventils (1) mündender Auslasskanal (13) und ein das Dichtelement (14) zumindest bereichsweise umgebendes Strömungsleitelement (16) vorgesehen sind, wobei das Dichtelement (14) mit einem in einem auf einer dem Fluidraum (15) abgewandten Seite des Strömungsleitelements (16) ausgebildeten Magnetankerraum (17) angeordneten Magnetanker (5) wirkverbunden ist, wobei Ventilkörper (3) und Strömungsleitelement (16) mindestens einen eine Fluidverbindung zwischen dem Fluidraum (15) und dem Magnetankerraum (17) herstellenden Verbindungskanal (21) gemeinsam ausbilden, **dadurch gekennzeichnet, dass** in dem Ventilkörper (3) mindestens ein Radialkanal (25) ausgebildet ist, der eine Fluidverbindung zwischen dem Auslasskanal (13) und dem Verbindungskanal (21) herstellt, wobei das Strömungsleitelement (16) auf einem Boden (27) des Fluidraums (15) aufliegt und der Radialkanal (25) die Auflagefläche (28) des Strömungsleitelements (16) durchgreift, und wobei das Strömungsleitelement (16) eine in Richtung des Auslasskanals zumindest bereichsweise gekrümmte Strömungsleitfläche aufweist.

## Claims

1. Solenoid valve (1) with a valve body (3), the valve body (3) having provided in it a valve seat (12) closable by means of a sealing element (14), at least one outlet duct (13) issuing into a fluid space (15), receiving the sealing element (14) at least in regions, of the solenoid valve (1), and a flow guide element (16) surrounding the sealing element (14) at least in regions, the sealing element (14) being operatively connected to a magnet armature (5) arranged in a magnet armature space (17) formed on a side of the flow guide element (16) which faces away from the fluid space (15), the valve body (3) and flow guide element (16) jointly forming at least one connecting duct (21) making a fluid connection between the fluid space (15) and the magnet armature space (17), **characterized in that** at least one radial duct (25) is formed in the valve body (3) and makes a fluid connection between the outlet duct (13) and the connecting duct (21), the flow guide element (16) lying on a bottom (27) of the fluid space (15), and the radial duct (25) passing through the bearing surface (28) of the flow guide element (16), and the flow guide element (16) having a flow guide surface which is curved at least in regions in the direction of the outlet duct.

2. Solenoid valve according to Claim 1, **characterized in that** the connecting duct (21) is present between an inner wall (22) of the valve body (3) and an outer wall (23) of the flow guide element (16).

3. Solenoid valve according to Claim 2, **characterized in that** the valve body (3) has in its inner wall (22) and/or the flow guide element (16) has in its outer wall (23) a recess (29) which coforms the connecting duct (21).

4. Solenoid valve according to one of the preceding claims, **characterized in that** the connecting duct (21) and/or the radial duct (25) are at least in regions round, in particular circularly round, in cross section.

5. Solenoid valve according to one of the preceding claims, **characterized in that** the flow guide element (16) is composed of metal or of plastic.

6. Solenoid valve according to one of the preceding claims, **characterized in that** the flow guide element (16) is designed as a stamped and bent part or as an injection molding.

7. Solenoid valve according to one of the preceding claims, **characterized in that** an alignment means for aligning the flow guide element (16) in the fluid space (15) in the circumferential direction is provided.

8. Driver assistance device, in particular ABS, TCS or ESP device, with at least one solenoid valve (1) having a valve body (3), the valve body (3) having provided in it a valve seat (12) closable by means of a sealing element (14), at least one outlet duct (13) issuing into a fluid space (15), receiving the sealing element (14) at least in regions, of the solenoid valve (1), and a flow guide element (16) surrounding the sealing element (14) at least in regions, the sealing element (14) being operatively connected to a magnet armature (5) arranged in a magnet armature space (17) formed on a side of the flow guide element (16) which faces away from the fluid space (15), the valve body (3) and flow guide element (16) jointly forming at least one connecting duct (21) making a fluid connection between the fluid space (15) and the magnet armature space (17), **characterized in that** at least one radial duct (25) is formed in the valve body (3) and makes a fluid connection between the outlet duct (13) and the connecting duct (21), the flow guide element (16) lying on a bottom (27) of the fluid space (15), and the radial duct (25) passing through the bearing surface (28) of the flow guide element (16), and the flow guide element (16) having a flow guide surface which is curved at least in regions in the direction of the outlet duct.

## Revendications

1. Electrovanne (1) comprenant un corps de soupape (3), un siège de soupape (12) pouvant être fermé par un élément d'étanchéité (14), au moins un canal de sortie (13) débouchant dans un espace de fluide (15) de l'électrovanne (1) recevant au moins en partie l'élément d'étanchéité (14) et un élément de guidage de l'écoulement (16) entourant au moins en partie l'élément d'étanchéité (14) étant prévus dans le corps de soupape (3), l'élément d'étanchéité (14) étant en liaison fonctionnelle avec une armature d'aimant (5) disposée dans un espace d'armature d'aimant (17) réalisé d'un côté de l'élément de guidage de l'écoulement (16) opposé à l'espace de fluide (15), le corps de soupape (3) et l'élément de guidage de l'écoulement (16) constituant ensemble au moins un canal de liaison (21) établissant une liaison fluidique entre l'espace de fluide (15) et l'espace d'armature d'aimant (17), **caractérisée en ce qu'**au moins un canal radial (25) est réalisé dans le corps de soupape (3), lequel établit une liaison fluidique entre le canal de sortie (13) et le canal de liaison (21), l'élément de guidage de l'écoulement (16) reposant sur un fond (27) de l'espace de fluide (15) et le canal radial (25) venant en prise à travers la surface d'appui (28) de l'élément de guidage de l'écoulement (16), et l'élément de guidage de l'écoulement (16) présentant une surface de guidage de l'écoulement au moins en partie courbe dans la direction du canal de sortie.

2. Electrovanne selon la revendication 1, **caractérisée en ce que** le canal de liaison (21) est prévu entre une paroi interne (22) du corps de soupape (3) et une paroi externe (23) de l'élément de guidage de l'écoulement (16).

3. Electrovanne selon la revendication 2, **caractérisée en ce que** le corps de soupape (3) dans sa paroi interne (22) et/ou l'élément de guidage de l'écoulement (16) dans sa paroi externe (23) présentent un évidement (29) contribuant à constituer le canal de liaison (21).

4. Electrovanne selon l'une quelconque des revendications précédentes, **caractérisée en ce que** le canal de liaison (21) et/ou le canal radial (25) ont une section transversale au moins en partie ronde, en particulier circulaire.

5. Electrovanne selon l'une quelconque des revendications précédentes, **caractérisée en ce que** l'élément de guidage de l'écoulement (16) se compose de métal ou de plastique.

6. Electrovanne selon l'une quelconque des revendications précédentes, **caractérisée en ce que** l'élément de guidage de l'écoulement (16) est réalisé sous forme de pièce estampée-cintrée ou sous forme de pièce moulée par injection.

7. Electrovanne selon l'une quelconque des revendications précédentes, **caractérisée en ce qu'**un moyen d'orientation pour orienter l'élément de guidage de l'écoulement (16) dans la direction périphérique est prévu dans l'espace de fluide (15).

8. Dispositif d'assistance à la conduite, en particulier dispositif ABS, TCS ou ESP, comprenant au moins une électrovanne (1) présentant un corps de soupape (3), au moins un canal de sortie (13) débouchant dans un espace de fluide (15) de l'électrovanne (1) recevant au moins en partie l'élément d'étanchéité (14) et un élément de guidage de l'écoulement (16) entourant au moins en partie l'élément d'étanchéité (14) étant prévus dans le corps de soupape (3), l'élément d'étanchéité (14) étant en liaison fonctionnelle avec une armature d'aimant (5) disposée dans un espace d'armature d'aimant (17) réalisé d'un côté de l'élément de guidage de l'écoulement (16) opposé à l'espace de fluide (15), le corps de soupape (3) et l'élément de guidage de l'écoulement (16) constituant ensemble au moins un canal de liaison (21) établissant une liaison fluidique entre l'espace de fluide (15) et l'espace d'armature d'aimant (17), **caractérisé en ce qu'**au moins un canal radial (25) est réalisé dans le corps de soupape (3), lequel établit une liaison fluidique entre le canal de sortie (13) et le canal de liaison (21), l'élément de guidage de l'écoulement (16) reposant sur un fond (27) de l'espace de fluide (15) et le canal radial (25) venant en prise à travers la surface d'appui (28) de l'élément de guidage de l'écoulement (16), et l'élément de guidage de l'écoulement (16) présentant une surface de guidage de l'écoulement au moins en partie courbe dans la direction du canal de sortie.
